# EUROPEAN PATENT SPECIFICATION

(11) **EP 3 971 403 B1**
(45) Date of publication and mention of the grant of the patent: **18.11.2026**
(21) Application number: 21192221.6
(22) Date of filing: 19.08.2021
(51) Int. Cl.: F02D 41/02, F02D 29/04, F02D 41/22, E02F 9/20, F01N 3/021, F01N 9/00, F15B 11/00, F15B 21/00, F15B 13/00, E02F 3/04, F01N 11/00, E02F 9/22, F01N 3/023

(54) **DIESEL PARTICULATE FILTER SYSTEM CONTROL**
STEUERUNG EINES DIESELPARTIKELFILTERSYSTEMS
PILOTAGE D'UN SYSTÈME DE FILTRE À PARTICULES DIESEL

(30) Priority: 27.08.2020 GB 202013469
(43) Date of publication of application: 23.03.2022
(73) Proprietor: J.C. Bamford Excavators Limited, Uttoxeter Staffordshire ST14 5JP (GB)
(72) Inventor: Slater, Stephen, Uttoxeter, ST14 5JP (GB); Cook, Matthew, Uttoxeter, ST14 5JP (GB); Van Der Cruyssen, Mark, Uttoxeter, ST14 5JP (GB); McCarthy, Paul, Uttoxeter, ST14 5JP (GB)
(74) Representative: Hambley, Christopher John

(56) References cited:
- EP-A1- 2 208 872
- EP-A1- 2 423 481
- EP-A1- 2 516 824
- EP-A1- 3 564 449
- WO-A1-2013/135717

## Description

### FIELD

The present teachings relate to a control system for an off-highway vehicle, an engine system for an off-highway vehicle, and to an off-highway vehicle.

### BACKGROUND

Off-highway vehicles or working machines are for example those used in construction industries (e.g. backhoe loaders, slew excavators telescopic handlers, forklifts, skid-steer loaders, dump trucks, bulldozers, graders), agricultural industries (tractors, combine harvesters, self-propelled harvesters and sprayers), quarrying (e.g. loading shovels, aggregate crushing equipment), and forestry (timber harvesters, feller bunchers). One such off-highway vehicle is a dumper vehicle, often referred to as "site dumpers", which are manufactured in various different sizes to suit the needs of the application, ranging from those required for small building sites to those required for large scale construction projects.

Off-highway vehicles may be fitted with a diesel particulate filter (DPF) for removing diesel particulate matter or soot from the exhaust gas. Through continued used of the machine, the particulate matter or soot collects and accumulates on the filter which can decrease the effectiveness of the DPF.

In order to clean the DPF the soot collected on the DPF can be burned off, which is known as regeneration of the DPF. Typically, the regeneration may be done periodically to ensure that the soot build up does not exceed acceptable levels, but this can result in the regeneration occurring unnecessarily.

Passive DPF filters use a catalyst to remove accumulations, but need high temperatures to work. This cannot be guaranteed in normal working conditions or duties for off-highway applications. This is because the engine may spend a significant time idling, such that sufficient temperatures may not be achieved passively, or cannot be maintained for sufficient time to fully burn off the accumulated soot. Active regeneration of the DPF involves heating the filter to temperatures at which the soot can be burned off. Regeneration can take place when the accumulation of the particulate matter on the filter reaches a pre-determined level.

EP2423481 describes a regeneration system in which a gate lock lever may be in a locked state and work may be not performed. In such a case, when exhaust gas temperature is lower than the threshold value, temperature-rising assistance is started to apply a hydraulic load to increase exhaust gas temperature. In a case where the work is resumed during the regeneration, when an operator pulls down the gate lock lever to the first position, the engine output is returned to the minimum engine output. Thus, the temperature-rising assistance is stopped.

EP2516824 describes a power system comprising an engine that produces exhaust, a particulate filter that traps soot from the engine, and a controller that switches the power system from a first operation mode into a second operation mode to regenerate the particulate filter wherein a transition between the first operation mode and the second operation mode occurs at a slower rate when an amount of soot in the particulate filter changes relative to a threshold than when a load on the engine changes.

The present teachings seek to overcome or at least mitigate one or more problems associated with the prior art.

### SUMMARY

The present invention provides an off-highway vehicle or a working machine as claimed in claim 1.

The off-highway vehicle may be a dumper vehicle, a backhoe loader, an excavator, a telescopic handler, a forklift, or a skid-steer loader.

The off-highway vehicle may be a dumper vehicle comprising a frame, front and rear wheels mounted to the frame, an operator seat mounted to the frame, and an open topped container for carrying a load therein mounted to the frame between the front and rear wheels, wherein the container is moveable between a transport position for transporting a load and a discharge position for discharging of a load.

The off-highway vehicle may comprise an operator cab having the operator seat therein.

The off-highway vehicle may comprise a body and a working arm mounted to the body.

The induced parasitic load may be configured to raise the operating temperature of the engine to at least 300°C

The hydraulic system may incorporate a hydraulic load valve. The controller may be configured to selectively actuate the hydraulic load valve to induce the parasitic load onto the hydraulic system.

The hydraulic system may comprise a hydraulic circuit.

The hydraulic load valve may be configured to increase hydraulic fluid pressure along the hydraulic circuit to induce the parasitic load onto the hydraulic system.

The hydraulic circuit may comprise one or more hydraulic valves configured to selectively divert hydraulic fluid from the hydraulic circuit to power one or more hydraulic actuators, and wherein the hydraulic load valve is arranged on the hydraulic circuit downstream of the one or more hydraulic valves.

The hydraulic circuit may comprise one or more hydraulic valves configured to selectively divert hydraulic fluid from the hydraulic circuit to power one or more hydraulic actuators. The hydraulic circuit may comprise a bypass flow path arranged such that only hydraulic fluid not diverted to power the one or more hydraulic actuators flow along said bypass flow path, and the hydraulic load valve may be arranged on a carryover port of the hydraulic circuit.

The control system may be configured to calculate the minimal required parasitic load required for regenerating the DPF

The diesel engine may have a maximum rated power output and the parasitic load may be less than 10% of the maximum rated power output, preferably less than 5% of the maximum rated power output.

The controller may be configured to increase the engine speed in the range 1400-1800 RPM, for example approximately 1600 RPM.

The controller may be arranged to selectively remove the induced engine speed parasitic load: a) upon receipt by the controller of a signal indicative of an operator demand to move the vehicle; and/or b) upon receipt by the controller of a signal indicative of an operator demand to power one of the hydraulic actuators; and/or c) when a signal is received by the controller corresponding to a fill state of the DPF below a second threshold; and/or d) when an exhaust gas temperature of the engine is above a pre-determined temperature; and/or e) when a hydraulic oil temperature of the engine is above a predetermined temperature; and/or f) when a water temperature of the engine is above a predetermined temperature; and/or g) when a lubricant temperature of the engine is above a predetermined temperature; and/or h) when a temperature of a component of the engine is above a predetermined temperature.

The controller may be configured to receive a signal corresponding to a stationary state of the off-highway vehicle. The controller may be configured to only induce the engine speed parasitic load when the off-highway vehicle is in the stationary state.

The signal corresponding to a stationary state of the off-highway vehicle may be generated when: a) the off-highway vehicle has a travelling speed of approximately zero; and/or b) the off-highway vehicle is in neutral; and/or c) a parking brake of the off-highway vehicle has been actuated.

The controller may be configured to receive a signal corresponding to a fill state of the DPF being at or above a third threshold, greater than the second threshold. The controller may be configured to selectively limit the power output of the diesel engine in response to receiving the signal.

The controller may be configured to set a maximum engine speed in the range 1000-1400 RPM, for example approximately 1200 RPM.

The controller may be configured to receive a signal corresponding to a fill state of the DPF being at or above a fourth threshold, greater than the third threshold, and to selectively prevent operation of the off-highway vehicle in response to receiving the signal.

### BRIEF DESCRIPTION OF THE DRAWINGS

Embodiments will now be described with reference to the accompanying drawings, in which:
Figure 1 is an isometric view of an off-highway vehicle according to an embodiment;
Figure 2 is a schematic diagram of the hydraulic system of the off-highway vehicle of Figure 1; and
Figure 3 is a schematic diagram of an engine system of the off-highway vehicle of Figure 1.

### DETAILED DESCRIPTION OF EMBODIMENT(S)

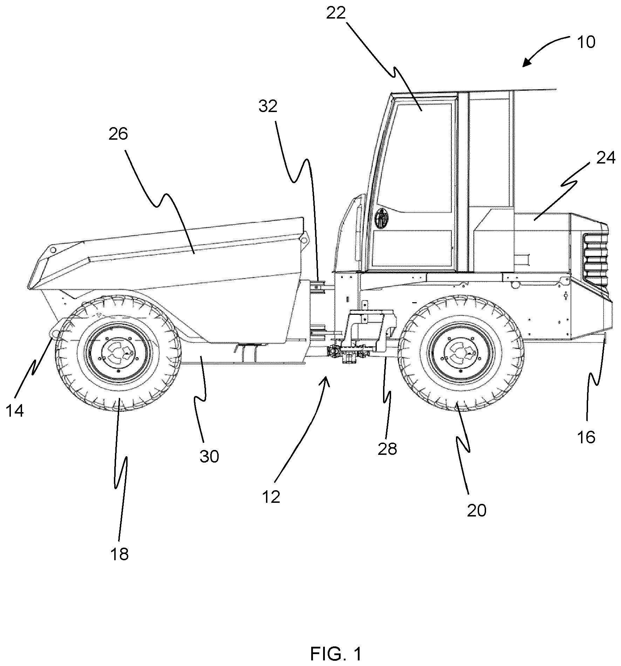

Referring firstly to Figure 1, an off-highway vehicle, also known as a working machine, is illustrated and is indicated generally at 10.

In the illustrated arrangement, the off-highway vehicle 10 is a dumper vehicle. In alternative arrangements, the off-highway vehicle or working machine may be selected from those used in construction industries (e.g. backhoe loaders, slew excavators telescopic handlers, forklifts, skid-steer loaders, dump trucks, bulldozers, graders), agricultural industries (e.g. tractors, combine harvesters, self-propelled harvesters and sprayers), quarrying (e.g. loading shovels, aggregate crushing equipment), and forestry (e.g. timber harvesters, feller bunchers).

The dumper vehicle 10 has a nominal laden capacity of 6 metric tonnes and a volume of heaped material (e.g. earth) of between 3.2-3.6m³ and of flowable material (e.g. concrete) of approximately 2.0m³. The vehicle 10 includes a structural chassis frame 12 having a front end 14 and a rear end 16. The frame 12 has two sets of wheels mounted to the frame, two front wheels 18 mounted proximate the front end 14 of the frame 12, and two rear wheels 20 mounted proximate the rear end 16 of the frame 12.

The frame 12 also has an operator seat mounted to the frame 12. The operator seat is located proximate to the rear wheels 20 along the longitudinal length of the frame 12. In the illustrated embodiment, the operator seat is provided within an operator cab 22. However, it will be appreciated that in alternative arrangements, an operator cab 22 may not be provided and a roll cage will be used instead.

The dumper vehicle 10 includes a housing 24 for housing a diesel engine of an engine system. The housing 24, and so the engine, are located rearward of the cab 22 on the frame 12. The housing 24 forms the rear extent of the dumping vehicle 10.

Although not illustrated, the engine system includes an after-treatment system so as to reduce the emissions of the engine system. The after-treatment system includes a DPF filter arranged in the exhaust flow path of the engine system so as to be capable of filtering particulate matter or soot from the engine exhaust gas. The engine system includes a sensor configured to monitor a fill state of the DPF and to generate a signal when the fill state of the DPF is at one or more pre-determined threshold levels.

An open topped container 26 for carrying a load therein, commonly referred to as a skip, is also mounted to the frame 12. The container 26 is positioned such that a majority of the elongate length of the container 26 is situated between the front 18 and rear wheels 20. The container 26 is pivotally mounted to the frame 12, via two pivotable mounts (not shown), which enables the container 26 to be moveable or pivotable proximate the front of both the container 26 and the frame 12 between a transport position for transporting a load and a discharge position for discharging of a load.

The frame 12 of the dumper vehicle 10 is provided in two parts that are able to articulate about at least a vertical axis with respect to each other. That is, the frame 12 includes a main chassis 28 and a front chassis 30.

The operator seat and operator cab 22 (or roll bar in alternative embodiments) are mounted to the main chassis 28. The container 26 is mounted to the front chassis 30. The main chassis 28 and the front chassis 30 are pivotally connected together via a linkage 32. The linkage 32 is such that the front chassis 30 is able to pivot or articulate about a vertical axis up to an angle of up to 35° with respect to the main chassis 28.

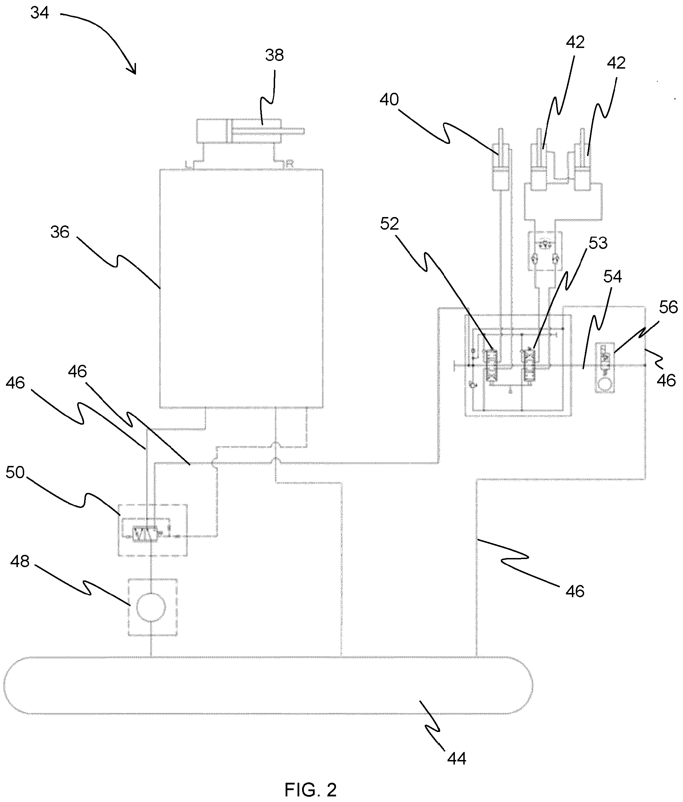

Referring now to Figure 2, a hydraulic system for the off-highway vehicle 10 is illustrated and is indicated generally at 34.

The hydraulic system 34 includes a steering system 36 for steering the off-highway vehicle 10. The steering system 36 includes a hydraulic actuator 38 configured to pivot the front wheels 18 of the off-highway vehicle 10.

The hydraulic system 34 includes a hydraulic actuator 40 configured to control a function of the off-highway vehicle 10. The hydraulic actuator 40 is configured to move or pivot the container 26 between the transport position for transporting a load and the discharge position for discharging of a load.

The hydraulic system 34 includes a hydraulic actuator 42 configured to control a function of the off-highway vehicle 10. The hydraulic actuator 42 is configured to slew the container 26 about a substantially upright axis (i.e. slew about a substantially horizontal plane). In the illustrated arrangement, two hydraulic actuators 42 are provided for slewing the container 26. In alternative arrangements, only a single hydraulic actuator 42 may be provided, or the hydraulic actuators 42 may be omitted from the off-highway vehicle 10. In arrangements where the off-highway vehicle 10 is not a dumper vehicle, it will be appreciated that the off-highway vehicle will be provided with one or more hydraulic actuators configured to control one or more functions of the off-highway vehicle.

The hydraulic system 34 includes a sump or reservoir 44 and a hydraulic circuit 46 defining a flow path for conveying hydraulic fluid to the hydraulic actuators 38, 40, 42. A hydraulic pump system 48 conveys a flow rate of hydraulic fluid along the hydraulic fluid circuit 46 to provide hydraulic fluid to the hydraulic actuators 38, 40, 42. In the illustrated embodiment, the hydraulic pump system 48 includes a fixed displacement pump. In alternative embodiments, the hydraulic pump system 48 may include multiple hydraulic pumps (e.g. a high displacement pump and a low displacement pump) configured to provide different rates of flow along the hydraulic circuit 46 to actuate the hydraulic actuators 38, 40, 42. The engine of the engine system drives the hydraulic pump system 48 in response to the demand or load from the hydraulic actuators 38, 40, 42. Whilst the hydraulic pump or pumps have been described as being a fixed hydraulic pump, it will be appreciated that in alternative arrangements the off-highway vehicle may include one or more variable hydraulic pumps.

The hydraulic system 34 includes a first valve 50 provided along the hydraulic fluid circuit 46. The first valve 50 is moveable between an active state and an inactive state. In the active state, the first valve 50 is configured to divert hydraulic fluid flow from the hydraulic fluid circuit 46, such that a rate of hydraulic fluid flow is delivered to the steering actuator 38. Hydraulic fluid that is directed to the steering system 36 returns to the sump 44 after exiting the steering system 36.

In the illustrated embodiment, the first valve is priority valve 50. The priority valve is configured to ensure that even when hydraulic fluid is being directed to other hydraulic actuators of the off-highway vehicle 10, an amount of hydraulic fluid flow is directed to the steering actuator 38. This arrangement helps to ensure that steering of the off-highway vehicle 10 is always possible.

The hydraulic system 34 includes a second valve 52 provided along the hydraulic fluid circuit 46. The second valve 52 is moveable between an active state and an inactive state. In the active state, the second valve 52 is configured to divert hydraulic fluid flow from the hydraulic fluid circuit 46, such that a rate of hydraulic fluid flow is delivered to the hydraulic actuator 40.

The hydraulic system 34 includes a third valve 53 provided along the hydraulic fluid circuit 46. The third valve 53 is moveable between an active state and an inactive state. In the active state, the third valve 53 is configured to divert hydraulic fluid flow from the hydraulic fluid circuit 46, such that a rate of hydraulic fluid flow is delivered to the hydraulic actuator(s) 42. Hydraulic fluid that has been diverted from the hydraulic circuit 46 to hydraulic actuators 40, 42 subsequently returns to the hydraulic circuit 46.

The hydraulic circuit 46 includes a bypass port or flow path 54 that extends from the second and or third valves 52, 53. The bypass port 54 is configured such that only hydraulic fluid that is not diverted to the hydraulic actuator 40 and or hydraulic actuator 42 flows along the bypass port 54. The bypass port 54 is positioned between the final valve on the hydraulic circuit 46 and the sump 44.

A load valve 56 is positioned on the bypass port 54. The load valve 56 is moveable between an active state and an inactive state. In the active state, the load valve 56 is configured induce a hydraulic load on the hydraulic system 34. Put another way, in an active state, the load valve 56 is configured to induce a parasitic load on the hydraulic system 34.

When there is no demand from steering actuator 38 or actuators 40, 42, hydraulic fluid flow is directed along the hydraulic circuit 46 from the sump 44 back to the sump 44. With the load valve 56 in an inactive state, there is little to no resistance to hydraulic fluid flow. Consequently, the pressure in the hydraulic circuit 46 is low in this state, and the load on the engine is low.

By switching the load valve 56 to an active state, hydraulic fluid is prevented from flowing through the load valve 56 until the hydraulic fluid in the hydraulic circuit 46 has reached a pre-determined threshold value. In this way, the load valve 56, when in the active state, increases the hydraulic pressure in the hydraulic circuit 46, which increases the load on the engine. This increased load on the engine consequently heats the DPF.

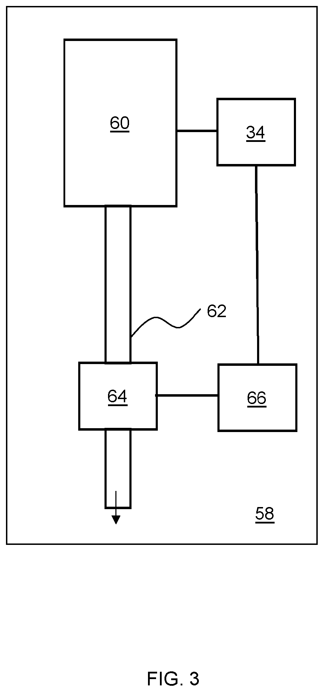

Referring now to Figure 3, the engine system 58 configured to power the off-highway vehicle 10 is illustrated.

The engine system 58 includes a diesel engine 60. The engine 60 is configured to power the wheels 18, 20 to propel the off-highway vehicle 10. The engine 60 is configured to power the hydraulic system 34.

Exhaust gases exit the engine 60 via an exhaust duct 62. A DPF 64 is installed along the exhaust duct 62. The engine system includes a sensor (not shown) configured to monitor a fill state of the DPF 64. The engine system 58 generates a signal when the fill state of the DPF 64 is at or above different threshold values.

The engine system 58 includes a control system 66. The control system 66 includes a controller configured to receive the signal from the engine system 58 corresponding to a fill state of the DPF 64.

When the controller receives a signal corresponding to the fill state of the DPF 64 being at or above a first threshold level or value, the controller selectively induces a parasitic load on the engine 60 by inducing the parasitic load onto the hydraulic system to increase the operating temperature of the engine 60. This increased operating temperature raises the temperature of the DPR 64 so as to become more favourable to regenerating the DPF 64 during natural operation of the off-highway vehicle 10.

In order to induce the parasitic load onto the hydraulic system 34 the controller is configured to selectively actuate the hydraulic load valve 56 to induce the parasitic load. The engine 60 has a maximum rated power output and the parasitic load is less than 10% of the maximum rated power output, but may be less than 5% of the maximum rated power output. It will be understood that the parasitic load induced should be minimised to reduce excessive fuel consumption. The control system 66 is configured to induce the minimal required parasitic load that is sufficient to ensure regeneration is successful.

The controller of the control system 66 is configured to selectively remove the parasitic load on the hydraulic system when a signal is received by the controller corresponding to a fill state of the DPF 64 being at or above a second threshold, greater than the first threshold. The controller may also remove the parasitic load when: an operator demanded engine speed is above a predetermined engine speed; an operator demanded engine power is above a predetermined engine power; a signal is received by the controller corresponding to a fill state of the DPF 64 being below the first threshold; or an exhaust gas temperature of the engine 60 is above a predetermined temperature.

The controller is configured to selectively induce the parasitic load on the engine 60 by increasing the engine speed. For exemplary purposes, the controller may increase the engine speed in the range 1400-1800 RPM, for example approximately 1600 RPM.

In the present embodiment, the controller is configured to selectively increase the engine speed in response to receiving the signal corresponding to a fill state of the DPF 64 being at or above the second threshold, which is greater than the first threshold.

The controller of the control system 66 is configured to selectively remove the increased engine speed demand on the engine 60 under different conditions. The controller may remove the increased engine speed demand: upon receipt by the controller of a signal indicative of an operator demand to move the vehicle; upon receipt by the controller of a signal indicative of an operator demand to power one of the hydraulic actuators; when a signal is received by the controller corresponding to a fill state of the DPF below the second threshold; when an exhaust gas temperature of the engine is above a pre-determined temperature.

In some arrangements, the controller may be configured to only enable the increased engine speed demand to occur when the off-highway vehicle 10 is stationary. For this purpose, the controller may be configured to receive a signal corresponding to a stationary state of the off-highway vehicle 10, and to only induce the engine speed parasitic load when the off-highway vehicle 10 is in the stationary state.

The stationary state of the off-highway vehicle may be generated through one or more of the off-highway vehicle has a travelling speed of approximately zero, the off-highway vehicle is in neutral, or a parking brake of the off-highway vehicle has been actuated, or through any other suitable condition of the off-highway vehicle 10.

When the fill state of the DPF 64 is at a third threshold level, which is greater than the second threshold, the engine system 58 emits a signal. The controller is configured to receive the signal corresponding to a fill state of the DPF 64 being at or above the third threshold and to limit the power output of the engine 60. For exemplary purposes, the controller may be configured to set a maximum engine speed in the range 1000-1400 RPM, for example approximately 1200 RPM.

When the fill state of the DPF 64 is at a fourth threshold level, which is greater than the third threshold, the engine system 58 emits a signal. The controller is configured to receive the signal corresponding to a fill state of the DPF 64 being at or above the fourth threshold and to prevent operation of the off-highway vehicle 10 in response to receiving the signal.

Although the teachings have been described above with reference to one or more preferred embodiments, it will be appreciated that various changes or modifications may be made without departing from the scope as defined in the appended claims.

## Claims

1. An off-highway vehicle or a working machine comprising:
an engine system; and
a hydraulic system,
wherein the engine system comprises:
a diesel engine, wherein the hydraulic system is powered by the diesel engine;
a diesel particulate filter (DPF) system comprising a DPF (64) and a sensor configured to monitor a fill state of the DPF (64), wherein the sensor is configured to generate a first signal when the fill state of the DPF (64) is at or above a first threshold; and
a control system (66) comprising a controller, wherein the controller is configured to receive the first signal and to selectively induce a parasitic load on the diesel engine (60) by inducing the parasitic load onto the hydraulic system (34) to increase an operating temperature of the engine (60) in response to receiving the first signal,
**characterised in that**:
the controller is configured to receive a second signal corresponding to a fill state of the DPF (64) being at or above a second threshold, greater than the first threshold;
the controller is arranged to selectively remove the parasitic load induced onto the hydraulic system (34) when the second signal is received by the controller; and
the controller is configured to selectively increase the engine speed in response to receiving the second signal.

2. An off-highway vehicle or a working machine as defined in claim 1, wherein the hydraulic system (34) incorporates a hydraulic load valve (56), and wherein the controller is configured to selectively actuate the hydraulic load valve (56) to induce the parasitic load onto the hydraulic system (34).

3. An off-highway vehicle or a working machine according to claim 2, wherein the hydraulic system (34) comprises a hydraulic circuit (46), and wherein the hydraulic load valve (56) is configured to increase hydraulic fluid pressure along the hydraulic circuit (46) to induce the parasitic load onto the hydraulic system (34).

4. An off-highway vehicle or a working machine as defined in claim 2 or claim 3, wherein the hydraulic system (34) comprises a hydraulic circuit (46), wherein the hydraulic circuit (46) comprises one or more hydraulic valves (50, 52, 53) configured to selectively divert hydraulic fluid from the hydraulic circuit (46) to power one or more hydraulic actuators (38, 40, 42), and wherein the hydraulic load valve (56) is arranged on the hydraulic circuit (46) downstream of the one or more hydraulic valves (50, 52, 53).

5. An off-highway vehicle or a working machine as defined in any of claims 2 to 4, wherein the hydraulic system (34) comprises a hydraulic circuit (46), wherein the hydraulic circuit (46) comprises one or more hydraulic valves (50, 52, 53) configured to selectively divert hydraulic fluid from the hydraulic circuit to power one or more hydraulic actuators (38, 40, 42), wherein the hydraulic circuit (46) comprises a bypass flow path (54) arranged such that only hydraulic fluid not diverted to power the one or more hydraulic actuators (38, 40, 42) flows along said bypass flow path (54), and wherein the hydraulic load valve (56) is arranged on a carryover port of the hydraulic circuit (46).

6. An off-highway vehicle or a working machine as defined in any preceding claim, wherein the control system (66) is configured to calculate the minimal required parasitic load required for regenerating a DPF, and wherein the diesel engine (60) has a maximum rated power output and the parasitic load is less than 10% of the maximum rated power output, preferably less than 5% of the maximum rated power output.

7. An off-highway vehicle or a working machine as defined in any preceding claim, wherein the controller is configured to receive a third signal corresponding to a fill state of the DPF (64) being at or above a third threshold, greater than the second threshold, and wherein the controller is configured to selectively limit the power output of the diesel engine (60) in response to receiving the third signal.

8. An off-highway vehicle or a working machine as defined in claim 7, wherein, in response to receiving the third signal, the controller is configured to set a maximum engine speed in the range 1000-1400 RPM.

9. An off-highway vehicle or a working machine as defined in claim 7, wherein, in response to receiving the third signal, the controller is configured to set a maximum engine speed of approximately 1200 RPM.

10. An off-highway vehicle or a working machine as defined in claim 7, 8 or 9, wherein the controller is configured to receive a fourth signal corresponding to a fill state of the DPF (64) being at or above a fourth threshold, greater than the third threshold, and to selectively prevent operation of the off-highway vehicle (10) in response to receiving the fourth signal.

11. An off-highway vehicle as defined in any preceding claim, wherein the off-highway vehicle is a dumper vehicle, a backhoe loader, an excavator, a telescopic handler, a forklift, or a skid-steer loader.

## Patentansprüche

1. Off-Highway-Fahrzeug oder Arbeitsmaschine, umfassend:
ein Motorsystem; und
ein Hydrauliksystem,
wobei das Motorsystem Folgendes umfasst:
einen Dieselmotor, wobei das Hydrauliksystem durch den Dieselmotor angetrieben wird;
ein Dieselpartikelfiltersystem (DPF-System), das einen DPF (64) und einen Sensor umfasst, der dazu ausgebildet ist, einen Beladungszustand des DPF (64) zu überwachen, wobei der Sensor dazu ausgebildet ist, ein erstes Signal zu erzeugen, wenn der Beladungszustand des DPF (64) an oder über einem ersten Schwellenwert liegt; und
ein Steuersystem (66), das eine Steuereinheit umfasst, wobei die Steuereinheit dazu ausgebildet ist, das erste Signal zu empfangen und wahlweise eine parasitäre Last auf dem Dieselmotor (60) hervorzurufen, indem auf dem Hydrauliksystem (34) die parasitäre Last hervorgerufen wird, um eine Betriebstemperatur des Motors (60) als Reaktion auf den Empfang des ersten Signals zu erhöhen,
**dadurch gekennzeichnet, dass**
die Steuereinheit dazu ausgebildet ist, ein zweites Signal zu empfangen, das einem Beladungszustand des DPF (64) entspricht, der an oder über einem zweiten Schwellenwert liegt, der größer als der erste Schwellenwert ist;
die Steuereinheit eingerichtet ist, die auf dem Hydrauliksystem (34) hervorgerufene parasitäre Last wahlweise aufzuheben, wenn das zweite Signal von der Steuereinheit empfangen wird; und
die Steuereinheit dazu ausgebildet ist, die Motordrehzahl als Reaktion auf den Empfang des zweiten Signals wahlweise zu erhöhen.

2. Off-Highway-Fahrzeug oder Arbeitsmaschine nach Anspruch 1, wobei das Hydrauliksystem (34) ein hydraulisches Lastventil (56) aufweist, und wobei die Steuereinheit dazu ausgebildet ist, das hydraulische Lastventil (56) wahlweise zu betätigen, um die parasitäre Last auf dem Hydrauliksystem (34) hervorzurufen.

3. Off-Highway-Fahrzeug oder Arbeitsmaschine nach Anspruch 2, wobei das Hydrauliksystem (34) einen Hydraulikkreis (46) umfasst, und wobei das hydraulische Lastventil (56) dazu ausgebildet ist, den Hydraulikfluiddruck entlang des Hydraulikkreises (46) zu erhöhen, um die parasitäre Last auf dem Hydrauliksystem (34) hervorzurufen.

4. Off-Highway-Fahrzeug oder Arbeitsmaschine nach Anspruch 2 oder Anspruch 3, wobei das Hydrauliksystem (34) einen Hydraulikkreis (46) umfasst, wobei der Hydraulikkreis (46) ein oder mehrere dazu ausgebildete hydraulische Ventile (50, 52, 53) umfasst, Hydraulikfluid wahlweise aus dem Hydraulikkreis (46) umzuleiten, um einen oder mehrere hydraulische Aktuatoren (38, 40, 42) anzutreiben, und wobei das hydraulische Lastventil (56) auf dem Hydraulikkreis (46) stromabwärts der einen oder mehreren hydraulischen Ventile (50, 52, 53) angeordnet ist.

5. Off-Highway-Fahrzeug oder Arbeitsmaschine nach einem der Ansprüche 2 bis 4, wobei das Hydrauliksystem (34) einen Hydraulikkreis (46) umfasst, wobei der Hydraulikkreis (46) ein oder mehrere dazu ausgebildete hydraulische Ventile (50, 52, 53) umfasst, Hydraulikfluid wahlweise aus dem Hydraulikkreis umzuleiten, um einen oder mehrere hydraulische Aktuatoren (38, 40, 42) anzutreiben, wobei der Hydraulikkreis (46) einen Bypass-Strömungspfad (54) umfasst, der derart angeordnet ist, dass nur Hydraulikfluid, das nicht umgeleitet wird, um den einen oder die mehreren hydraulischen Aktuatoren (38, 40, 42) anzutreiben, entlang des Bypass-Strömungspfads (54) strömt, und wobei das hydraulische Lastventil (56) an einem Power-Beyond-Anschluss des Hydraulikkreises (46) angeordnet ist.

6. Off-Highway-Fahrzeug oder Arbeitsmaschine nach einem vorstehenden Anspruch, wobei das Steuersystem (66) dazu ausgebildet ist, die minimale erforderliche parasitäre Last, die zur Regeneration eines DPF erforderlich ist, zu berechnen, und wobei der Dieselmotor (60) eine maximale Nennleistung hat und die parasitäre Last weniger als 10 % der maximalen Nennleistung beträgt, bevorzugt weniger als 5 % der maximalen Nennleistung.

7. Off-Highway-Fahrzeug oder Arbeitsmaschine nach einem vorstehenden Anspruch, wobei die Steuereinheit dazu ausgebildet ist, ein drittes Signal zu empfangen, das einem Beladungszustand des DPF (64) entspricht, der an oder über einem dritten Schwellenwert liegt, der größer als der zweite Schwellenwert ist, und wobei das Steuergerät dazu ausgebildet ist, die Leistungsabgabe des Dieselmotors (60) als Reaktion auf den Empfang des dritten Signals wahlweise zu begrenzen.

8. Off-Highway-Fahrzeug oder Arbeitsmaschine nach Anspruch 7, wobei die Steuereinheit dazu ausgebildet ist, als Reaktion auf den Empfang des dritten Signals eine maximale Motordrehzahl in dem Bereich 1000-1400 RPM festzulegen.

9. Off-Highway-Fahrzeug oder Arbeitsmaschine nach Anspruch 7, wobei die Steuereinheit dazu ausgebildet ist, als Reaktion auf den Empfang des dritten Signals eine maximale Motordrehzahl von ungefähr 1200 RPM festzulegen.

10. Off-Highway-Fahrzeug oder Arbeitsmaschine nach Anspruch 7, 8 oder 9, wobei die Steuereinheit dazu ausgebildet ist, ein viertes Signal zu empfangen, das einem Beladungszustand des DPF (64) entspricht, der an oder über einem vierten Schwellenwert liegt, der größer als der dritte Schwellenwert ist, und den Betrieb des Off-Highway-Fahrzeugs (10) als Reaktion auf den Empfang des vierten Signals wahlweise zu verhindern.

11. Off-Highway-Fahrzeug nach einem vorstehenden Anspruch, wobei das Off-Highway-Fahrzeug ein Dumper, ein Baggerlader, ein Bagger, ein Teleskoplader, ein Gabelstapler oder ein Kompaktlader ist.

## Revendications

1. Véhicule hors route ou engin de chantier comprenant :
un système moteur ; et
un système hydraulique,
dans lequel le système moteur comprend :
un moteur diesel, dans lequel le système hydraulique est alimenté par le moteur diesel ;
un système de filtre à particules diesel (DPF) comprenant un DPF (64) et un capteur configuré pour surveiller un état de remplissage du DPF (64), dans lequel le capteur est configuré pour générer un premier signal lorsque l'état de remplissage du DPF (64) est à un premier seuil ou au-dessus de celui-ci ; et
un système de commande (66) comprenant un dispositif de commande, dans lequel le dispositif de commande est configuré pour recevoir le premier signal et pour provoquer de manière sélective une charge parasite sur le moteur diesel (60) en provoquant la charge parasite sur le système hydraulique (34) pour augmenter une température de fonctionnement du moteur (60) en réponse à la réception du premier signal,
**caractérisé en ce que** :
le dispositif de commande est configuré pour recevoir un deuxième signal correspondant à un état de remplissage du DPF (64) qui est à un deuxième seuil, ou au-dessus de celui-ci, supérieur au premier seuil ;
le dispositif de commande est conçu pour retirer de manière sélective la charge parasite provoquée sur le système hydraulique (34) lorsque le deuxième signal est reçu par le dispositif de commande ; et
le dispositif de commande est configuré pour augmenter de manière sélective le régime moteur en réponse à la réception du deuxième signal.

2. Véhicule hors route ou engin de chantier tel que défini dans la revendication 1, dans lequel le système hydraulique (34) incorpore une vanne de charge hydraulique (56), et dans lequel le dispositif de commande est configuré pour actionner de manière sélective la vanne de charge hydraulique (56) pour provoquer la charge parasite sur le système hydraulique (34).

3. Véhicule hors route ou engin de chantier selon la revendication 2, dans lequel le système hydraulique (34) comprend un circuit hydraulique (46), et dans lequel la vanne de charge hydraulique (56) est configurée pour augmenter la pression de fluide hydraulique le long du circuit hydraulique (46) pour provoquer la charge parasite sur le système hydraulique (34).

4. Véhicule hors route ou engin de chantier tel que défini dans la revendication 2 ou la revendication 3, dans lequel le système hydraulique (34) comprend un circuit hydraulique (46), dans lequel le circuit hydraulique (46) comprend une ou plusieurs vannes hydrauliques (50, 52, 53) configurées pour faire dévier de manière sélective le fluide hydraulique depuis le circuit hydraulique (46) pour alimenter un ou plusieurs actionneurs hydrauliques (38, 40, 42), et dans lequel la vanne de charge hydraulique (56) est disposée sur le circuit hydraulique (46) en aval des une ou plusieurs vannes hydrauliques (50, 52, 53).

5. Véhicule hors route ou engin de chantier tel que défini dans l'une quelconque des revendications 2 à 4, dans lequel le système hydraulique (34) comprend un circuit hydraulique (46), dans lequel le circuit hydraulique (46) comprend une ou plusieurs vannes hydrauliques (50, 52, 53) configurées pour faire dévier de manière sélective le fluide hydraulique depuis le circuit hydraulique pour alimenter un ou plusieurs actionneurs hydrauliques (38, 40, 42), dans lequel le circuit hydraulique (46) comprend un canal d'écoulement de dérivation (54) disposé de telle sorte que seul le fluide hydraulique non dévié pour alimenter les un ou plusieurs actionneurs hydrauliques (38, 40, 42) s'écoule le long dudit canal d'écoulement de dérivation (54), et dans lequel la vanne de charge hydraulique (56) est disposée sur un orifice de primage du circuit hydraulique (46).

6. Véhicule hors route ou engin de chantier tel que défini dans une quelconque revendication précédente, dans lequel le système de commande (66) est configuré pour calculer la charge parasite requise minimale qui est requise pour régénérer un DPF, et dans lequel le moteur diesel (60) présente une puissance nominale de sortie maximale et la charge parasite est inférieure à 10 % de la puissance nominale de sortie maximale, de préférence inférieure à 5 % de la puissance nominale de sortie maximale.

7. Véhicule hors route ou engin de chantier tel que défini dans une quelconque revendication précédente, dans lequel le dispositif de commande est configuré pour recevoir un troisième signal correspondant à un état de remplissage du DPF (64) qui est à un troisième seuil, ou au-dessus de celui-ci, supérieur au deuxième seuil, et dans lequel le dispositif de commande est configuré pour limiter de manière sélective la puissance de sortie du moteur diesel (60) en réponse à la réception du troisième signal.

8. Véhicule hors route ou engin de chantier tel que défini dans la revendication 7, dans lequel, en réponse à la réception du troisième signal, le dispositif de commande est configuré pour régler un régime moteur maximal dans la plage de 1000 à 1400 RPM.

9. Véhicule hors route ou engin de chantier tel que défini dans la revendication 7, dans lequel, en réponse à la réception du troisième signal, le dispositif de commande est configuré pour régler un régime moteur maximal d'approximativement 1200 RPM.

10. Véhicule hors route ou engin de chantier tel que défini dans la revendication 7, la revendication 8 ou la revendication 9, dans lequel le dispositif de commande est configuré pour recevoir un quatrième signal correspondant à un état de remplissage du DPF (64) qui est à un quatrième seuil, ou au-dessus de celui-ci, supérieur au troisième seuil, et pour empêcher de manière sélective le fonctionnement du véhicule hors route (10) en réponse à la réception du quatrième signal.

11. Véhicule hors route tel que défini dans une quelconque revendication précédente, dans lequel le véhicule hors route est un camion-benne, une tractopelle, une excavatrice, un chariot télescopique, un chariot élévateur ou une chargeuse compacte.
